# EUROPÄISCHE PATENTSCHRIFT

(11) **EP 1 071 871 B1**
(45) Veröffentlichungstag und Bekanntmachung des Hinweises auf die Patenterteilung: **22.05.2002**
(21) Anmeldenummer: 99917877.5
(22) Anmeldetag: 26.03.1999
(51) Int. Cl.: F02B 37/22, F02B 37/24, F01D 17/16

(54) **ABGASTURBOLADERTURBINE**
EXHAUST GAS TURBOCHARGER TURBINE
TURBINE DE TURBOSOUFFLANTE A GAZ D'ECHAPPEMENT

(30) Priorität: 15.04.1998 DE 19816645
(43) Veröffentlichungstag der Anmeldung: 31.01.2001
(73) Patentinhaber: DaimlerChrysler AG, 70567 Stuttgart (DE)
(72) Erfinder: ERDMANN, Wolfgang, D-70439 Stuttgart (DE); FUNKE, Carsten, D-70439 Stuttgart (DE); HARDT, Thomas, D-71384 Weinstadt (DE); LÖFFLER, Paul, D-70199 Stuttgart (DE); SCHMIDT, Erwin, D-73666 Baltmannsweiler (DE); SUMSER, Siegfried, D-70184 Stuttgart (DE)
(86) Internationale Anmeldenummer: EP9902079
(87) Internationale Veröffentlichungsnummer: WO9953180

(56) Entgegenhaltungen:
- EP-A- 0 678 657
- DE-A- 3 943 705
- DE-A- 19 543 190
- DE-C- 4 232 400
- GB-A- 2 031 069

## Beschreibung

Die Erfindung betrifft eine Abgasturboladerturbine nach der im Oberbegriff von Anspruch 1 näher definierten Art.

Eine gattungsgemäße Abgasturboladerturbine ist in der DE 42 32 400 C1 beschrieben. Dabei befindet sich in dem Strömungsspalt zwischen dem Leitkanal und dem Turbinenlaufrad ein verstellbarer Strömungsleitapparat mit Leitschaufeln zur Regelung des Abgasdurchtrittes im Normalbetrieb, insbesondere im Teillastbereich der Brennkraftmaschine. Der verstellbare Strömungsleitapparat, welcher sich ständig in dem Strömungsspalt befindet, wird darüber hinaus auch für einen Bremsbetrieb der Brennkraftmaschine verwendet.

Nachteilig dabei ist jedoch, daß zwar durch den Strömungsleitapparat mit den Leitschaufeln im Teillastbetrieb eine bessere Beschleunigung erreicht wird, aber daß im Vollastbetrieb Wirkungsgradeinbußen und Verbrauchsnachteile auftreten.

Ähnliche verstellbare Strömungsleitapparate für Abgasturbinen von Abgasturboladern sind in der DE 43 03 520 C1 und 43 03 521 C1 beschrieben.

Zum weiteren Stand der Technik wird auf die EP 0 571 205 B1 und die US-PS 4,776,168 verwiesen, die jeweils verstellbare Strömungsleitapparate zur Regelung des Beschickungsgrades der Abgasturbine im Normalbetrieb beschreiben, wobei zum Teil ebenfalls ein Einsatz im Motorbremsbetrieb vorgesehen ist.

Der vorliegenden Erfindung liegt die Aufgabe zugrunde, eine Abgasturboladerturbine derart auszugestalten, daß eine hohe Bremsleistung im Bremsbetrieb der Brennkraftmaschine erreicht wird, wobei jedoch keine Wirkungsgradverluste bei Vollast auftreten sollen. Gleichzeitig soll jedoch auch das dynamische Fahrverhalten des Fahrzeuges verbessert werden.

Erfindungsgemäß wird diese Aufgabe durch die im kennzeichnenden Teil von Anspruch 1 genannten Merkmale gelöst.

Im Unterschied zum Stand der Technik, in welchem ein Leitgitter mit zumeist einstellbaren Leitschaufeln im Normalbetrieb ständig in den Strömungsspalt zur Regelung des Abgasdurchsatzes ragte, wird erfindungsgemäß nunmehr ein festes Leitgitter verwendet, das im Normalbetrieb in Aussparungen einer Gehäusewand des Turbinengehäuses gelagert ist. Dies bedeutet, im Normalbetrieb ist der Strömungsspalt völlig frei, weshalb bei Vollastbetrieb keine Wirkungsgradeinbußen in Kauf genommen werden müssen.

In erfinderischer Weise wird mit dem Leitgitter nunmehr das Potential der Aufladung durch den Abgasturbolader auch während des Motorbremsbetriebes genutzt. Hierzu wird beim Bremsbetrieb das Leitgitter mit einer entsprechenden axialen Verschiebung des Trägers in den Strömungsspalt hingeschoben, wobei die Leitschaufeln radial strömungsoptimiert so angeordnet sein können, daß auch bei geringem Restgasstrom die Abgasturbine weiterläuft. Dies bewirkt einerseits die Aufladung des Motors, womit sich dann in Folge wiederum der Gasstrom auf der Abgasseite erhöht, andererseits wird damit auch der Abgasgegendruck erhöht, was gleichzeitig die Turbine noch höher drehen läßt.

Dieser Prozeß wiederholt sich dann so lange, bis der Abgasgegendruck so groß ist, daß sich die Motordrehzahl nicht mehr erhöht. Die Bremswirkung des Motors und somit die des Fahrzeuges kommt dadurch zustande, weil die zusätzliche Luft und der zusätzliche Abgasgegendruck im Verbrennungsraum den Kolben sehr stark abbremst und zum Ende der Kompressionsphase die verdichtete Luft in bekannter Weise über ein zusätzlich im Zylinderkopf befindliches Ventil, z.B. eine Konstantdrossel, in die Auspuffanlage abgeführt wird. Auf diese Weise wird die Energie in Form von verdichteter Luft nicht wieder an den Kolben zurückgegeben.

Mit der erfindungsgemäßen Lösung wird eine höhere Bremsleistung bei gleichzeitiger Herabsetzung der thermischen Belastung von Motorbauteilen, insbesondere von Einspritzdüsen erreicht. Gleichzeitig erhält man dadurch eine Verbesserung des dynamischen Fahrverhaltens des Fahrzeuges, da beim Abbremsen des Motors der Turbolader weiterläuft und bei einem anschließenden Beschleunigungsvorgang ein Ladedruck am Motor sofort wieder ansteht. Auf diese Weise wird ein sogenanntes Turboloch vermieden.

Durch die Ausbildung des Gehäusewandteiles im Bereich der Leitschaufeln in Form einer Matrize in Gegenprofilform zu den Leitschaufeln wird - abgesehen von einem geringen Spiel, das zur axialen Verschiebung der Leitschaufeln notwendig ist - eine nahezu geschlossene Gehäusewand erreicht, bei gleichzeitig freiem Strömungsspalt. Damit befinden sich im normalen Turboladerbetrieb, d.h. im befeuerten Betrieb, keine Störkonturen in dem Leitkanal und in dem Strömungsspalt, welche den Wirkungsgrad des Turboladers verschlechtern würden.

In einer vorteilhaften Ausgestaltung der Erfindung ist die Bremseinrichtung als vorgefertigtes Modul ausgebildet und als Einheit in die Turbine einschiebbar. Dabei sind wenigstens das Leitgitter mit den Leitschaufeln, der Träger und das Gehäusewandteil, das die Matritze bildet, Teile des Modules. Selbstverständlich können gegebenenfalls auch noch weitere Teile integriert und als vorgefertigtes Modul in die Abgasturboladerturbine eingeschoben werden.

Vorteilhafte Ausgestaltungen und Weiterbildungen der Erfindung ergeben sich aus den Unteransprüchen und aus den nachfolgend anhand der Zeichnung prinzipmäßig beschriebenen Ausführungsbeispielen.

Es zeigt:
- Fig. 1: einen Längsschnitt nach der Linie I-I der Fig. 2 durch eine Abgasturboladerturbine;
- Fig. 2: eine Stirnansicht - teilweise im Schnitt - der Abgasturboladerturbine nach Fig. 1;
- Fig. 3: eine Draufsicht auf die Abgasturboladerturbine nach der Fig. 1; und
- Fig. 4: einen Längsschnitt (ausschnittsweise) durch eine Abgasturboladerturbine anderer Ausgestaltung.

In dem Ausführungsbeispiel ist eine Abgasturboladerturbine bekannter Bauart mit einem zweiflutigen spiralförmigen Leitkanal 1a und 1b, mit einem Turbinenlaufrad 2 und einem Strömungsspalt 3 zwischen den Leitkanälen 1a und 1b und dem Turbinenlaufrad 2 dargestellt. In dem Turbinengehäuse 4 befindet sich eine Innenhülse 5, welche eine Strömungsführung für die das Turbinenlaufrad 2 verlassenden Abgase bildet. Über ein Spannband 6 ist ein Abgasflansch 7 mit dem Turbinengehäuse 4 verbunden.

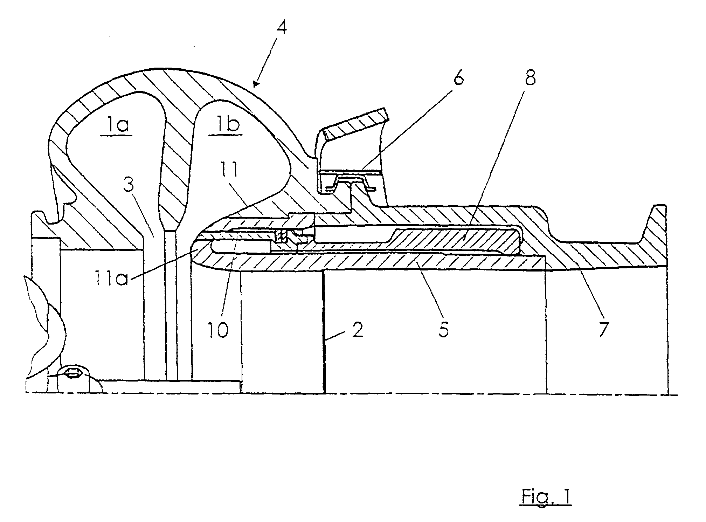

Axial außerhalb des Strömungsspaltes 3 ist auf dem Außenumfang der Innenhülse 5 ein Träger in Form einer Hülse 8 koaxial zur Längsachse des Turbinenlaufrades 2 axial verschiebbar angeordnet. Aus der dem Strömungsspalt 3 zugewandten Stirnseite der Hülse 8 ragen Leitschaufeln 9, die ein Leitgitter 10 bilden, wozu die Leitschaufeln 9 entsprechend verteilt in Ringform über den Umfang verteilt angeordnet sind. Im zurückgeschobenen bzw. eingeschobenen Zustand der Leitschaufeln 9, welche in der Fig. 1 dargestellt sind, sind die Leitschaufelvorderkanten bündig mit einem Gehäusewandteil 11a einer Gehäusewand 11 des Turbinengehäuses 4. Das Gehäusewandteil 11a kann einstückig mit der Innenhülse 5 sein.

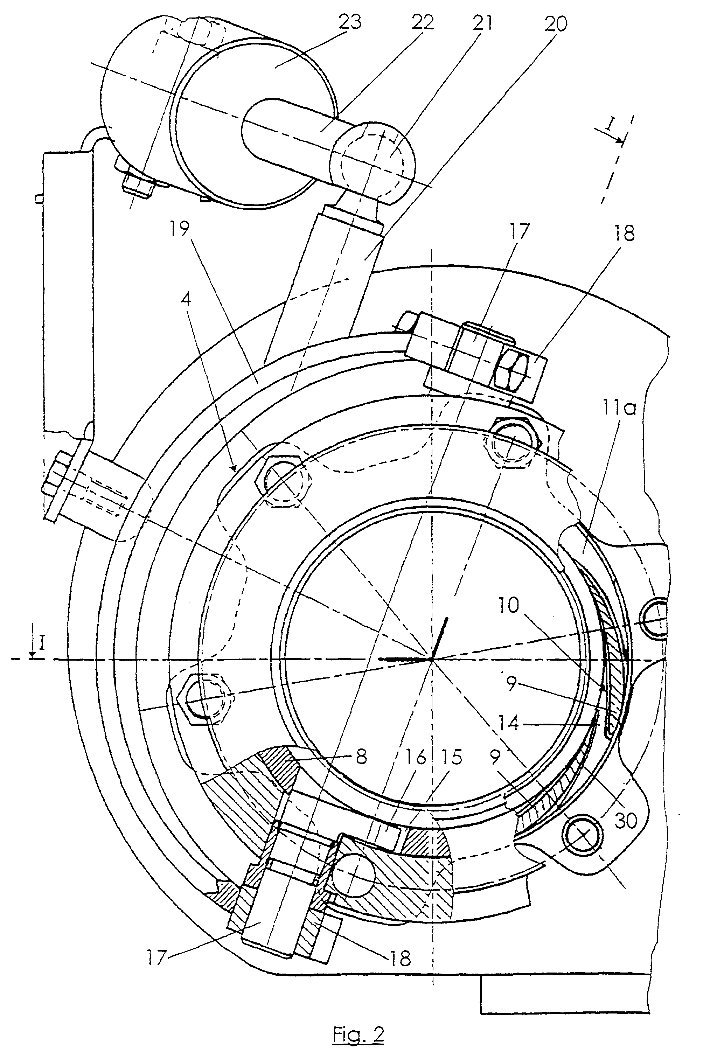

Aus der Fig. 2 ist teilweise die Stirnansicht der Gehäusewandteil 11a ersichtlich, wobei erkennbar ist, daß diese mit Aussparungen versehen ist, die eine Gegenprofilform zu den Leitschaufeln 9 bilden. Auf diese Weise ergibt sich bis auf einen geringen Spalt 30 (siehe Fig. 2) eine nahezu geschlossene Gehäusewand 11 bzw. 11a. Durch den Spalt 30 hindurchtretende Abgase können durch einen Dichtring 12 am Außenumfang der Hülse 8 am Austreten verhindert werden. Zusätzlich kann gegebenenfalls noch ein weiterer Dichtring 13 zwischen der äußeren Umfangswand der Innenhülse 5 und der inneren Umfangswand der Hülse 8 vorgesehen sein.

Aus der Fig. 2 ist die Lage der Leitschaufeln 9 erkennbar, wobei ein Strömungsspalt 14 zwischen den Schaufeln ersichtlich ist, der dazu dient, im ausgefahrenen Zustand des Leitgitters 10, in welchem die Leitschaufeln 9 beim Bremsbetrieb in den Strömungsspalt 3 ragen, den gesteuerten Durchtritt von Abgas zu ermöglichen.

Die axiale Verschiebung des Trägers bzw. der Hülse 5 zum Ausfahren der Leitschaufeln 9 in den Strömungsspalt 3 (siehe gestrichelte Darstellung) und zu deren Zurückziehen sind die verschiedensten Betätigungseinrichtungen möglich.

Die vorstehend beschriebene Bremseinrichtung ist mit ihren wesentlichen Teilen als vorgefertigtes Modul ausgebildet und kann somit als Einheit in das Turbinengehäuse eingesetzt werden. Wie ersichtlich, besteht dieses Modul aus dem Leitgitter 10 mit den Leitschaufeln 9, dem damit verbundenen Träger 8, dem Gehäusewandteil 11a, das einstückig mit der Innenhülse 5 ist, und dem Flansch 7. Dieses Modul wird bei der Montage in die Abgasturboladerturbine eingeschoben und über das Spannband 6, welches jeweils einen Ringflansch des Turbinengehäuses 4 und des Abgasflansches 7 umschließt, mit dem Turbinengehäuse 4 verbunden. Wie insbesondere aus der Fig. 1 ersichtlich ist, ist das Gehäusewandteil 11a in seiner Kontur an die Gehäusewand 11 angepaßt, womit im eingeschobenen Zustand der Leitschaufeln 9 keine störenden Kanten in dem Strömungskanal vorhanden sind.

In den Figuren 1 bis 3 ist eine mechanische Lösung prinzipmäßig dargestellt, wobei über nur wenige und zuverlässig wirkende Bauteile eine axiale Verschiebung mit einer direkten Krafteinleitung erreicht wird. Hierzu ist die Hülse 8 am Außenumfang mit zwei gegenüberliegenden Aussparungen 15 versehen, in die jeweils Verstellnocken 16 ragen. Die Verstellnocken 16 weisen eine Verstellwelle 17 auf, welche zwischen Klemmbacken 18 gehalten und gelagert sind. Die beiden sich gegenüberliegenden Klemmbacken 18, in denen jeweils eine Welle 17 gelagert ist, sind durch einen Bügel 19 miteinander verbunden, der sich bogenförmig außen über das Turbinengehäuse 4 erstreckt. An dem Bügel 19 greift ein Verstellhebel 20 einer Verstelleinrichtung an, der über ein Kugelgelenk 21, welches mit einer _ Kolbenstange 22 eines Pneumatikzylinders 23 verbunden ist, betätigbar ist.

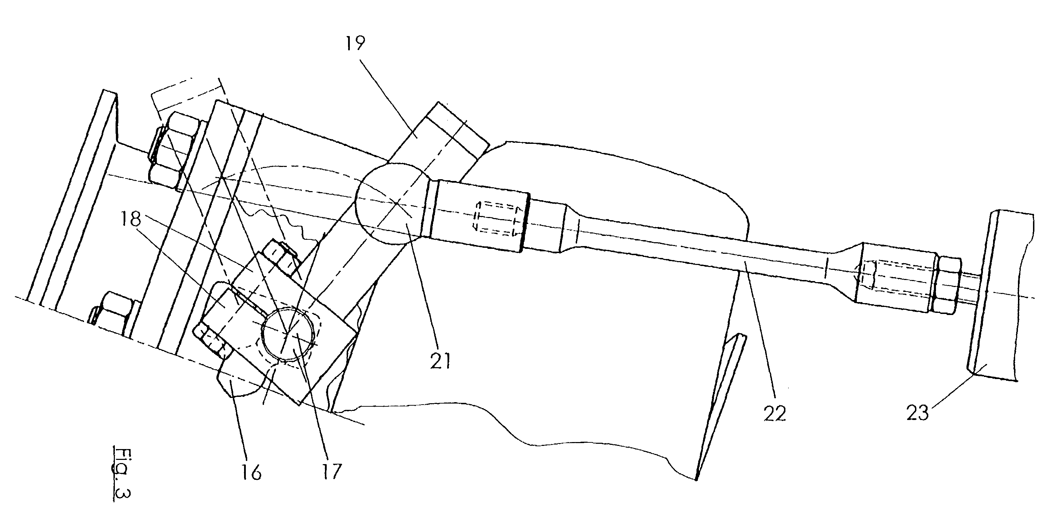

Aus der Fig. 3 sind die beiden Endstellungen für das Leitgitter 10, nämlich die ausgefahrene und die zurückgeschobene Stellung, erkennbar. Dies wird durch eine entsprechende Verschwenkung des Bügels 19 über den Pneumatikzylinder 23 erreicht. Hierzu sitzen die Verstellnocken entsprechend exzentrisch auf den jeweils mit ihnen verbundenen Wellen 17. Durch den direkten Eingriff der Verstellnocken 16 in die Hülse 8 wird die Verschiebekraft ohne Kippneigung achsparallel in die Hülse 8 eingeleitet.

Die Wellen 17 der Verstellnocken 16 werden durch das Turbinengehäuse 4 nach außen geführt. Durch die Drehmomentübertragung von dem Bügel 19 zu den Verstellnocken 16 über die Wellen 17, die auch die Verbindung von der Turboladerinnenseite zur Außenseite darstellen, ergeben sich nur zwei Dichtringspalten mit einem entsprechend langen Weg, so daß ein Abgasaustritt, auch bei einem Versagen des Dichtringes 12 weitgehend ausgeschlossen ist.

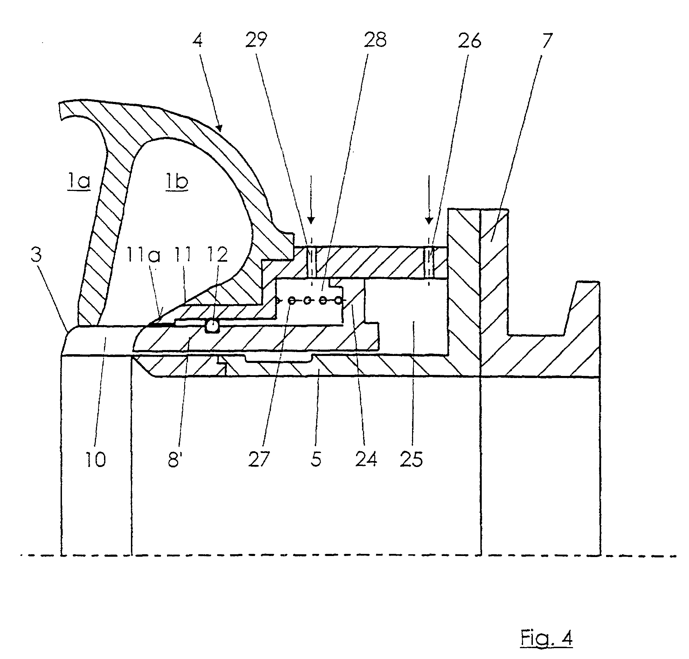

In der Figuren 4 ist prinzipmäßig eine pneumatische Betätigung der Hülse 8' dargestellt. Wie ersichtlich, ist hierzu die Hülse 8' als Ringkolben ausgebildet, mit einer Ringfläche 24 am hinteren Ende, d.h. von dem Strömungsspalt 3 abgewandten Ende der Hülse 8', welche eine Kolbenfläche bildet. Hinter der Ringfläche 24 befindet sich ein Kolbenraum 25 mit einer Druckluftzuführung 26. Wird über die Druckluftzuführung 26 Druckluft zugeführt, was in der Regel aus dem Bordnetz erfolgen wird, so wird die Hülse 8' axial in Richtung auf den Strömungsspalt 3 verschoben, womit die Leitschaufeln 9 des Leitgitters 10 entsprechend in den Spaltraum 3 geschoben werden, was jedoch nur bei Bremsbetrieb des Motors der Fall ist.

Zur Rückstellung des Leitgitters 10 greift auf der dem Kolbenraum 25 gegenüberliegenden Seite der Ringfläche 24 eine Feder 27 an, die sich mit ihrem anderen Ende an dem Turbinengehäuse 4 abstützt.

Statt der Feder 27 kann sich an dieser Stelle auch ein weiterer Kolbenraum 28 befinden, der ebenfalls auf die Ringfläche 24 wirkt, und der auch eine Druckluftzuführung 29 aufweist.

In der Fig. 4 sind zur Vereinfachung sowohl die Lösung mit der Feder 27 als auch mit dem Kolbenraum 28 und der Druckluftzuführung 29 eingezeichnet. Selbstverständlich sind beide Lösungen jedoch nur alternativ vorzusehen.

Die Anordnung einer Feder 27 hat den Vorteil, daß diese beim Einschieben des Leitgitters 10 in den Strömungsspalt 3 vorgespannt wird, womit eine Endlagendämpfung erreicht wird.

Eine Druckluftbeaufschlagung hat den Vorteil, daß geringere Betätigungskräfte erforderlich sind, wobei in diesem Falle jedoch im allgemeinen Endlagendämpfeinrichtungen vorgesehen werden sollten. Im Vergleich zu der mechanischen Lösung oder einer mechanisch/pneumatischen Lösung hat eine pneumatische Lösung den weiteren Vorteil, daß in diesem Falle weniger Bauteile erforderlich sind, und die Vorrichtung platzsparender ist.

Um ein vorgefertigtes Modul für die Bremseinrichtung zu erhalten, ist ebenso wie bei dem Ausführungsbeispiel nach den Figuren 1 bis 3 von dem Turbinengehäuse 4 ein Gehäusewandteil 11a abgetrennt, das als Matrize ausgebildet ist, jedoch einen kontinuierlichen Übergang zu der Gehäusewand 11 bildet. Das Gehäusewandteil 11a ist in nicht näher dargestellter Weise mit der Innenhülse 5 verbunden. Ebenso wie bei dem Ausführungsbeispiel nach den Figuren 1 bis 3 ist das Gehäusewandteil 11a mit einem axialen äußeren, zu dem Abgasflansch 7 gerichteten Wandteil versehen, das eine Führung für den Träger bzw. die Hülse 8' bildet.

Wie aus der Fig. 4 ersichtlich ist, können auf diese Weise wiederum das Leitgitter 10 mit den Leitschaufeln 9, die Innenhülse 5, die Hülse 8', die den Kolbenraum 25 umgebenden Gehäuseteile und gegebenenfalls auch noch der Abgasflansch 7 ein Modul bilden, das vorgefertigt ist und als Einheit in die Abgasturboladerturbine eingeschoben werden kann.

## Patentansprüche

1. Abgasturboladerturbine einer Brennkraftmaschine mit einem in einem Turbinengehäuse angeordneten spiralförmigen Leitkanal, einem Turbinenlaufrad, einem Strömungsspalt zwischen dem Leitkanal und dem Turbinenlaufrad und mit ein Leitgitter bildenden Leitschaufeln,
**dadurch gekennzeichnet, daß**
das Leitgitter (10) mit den Leitschaufeln (9) derart axial aus einem in axialer Richtung in dem Turbinengehäuse (4) verschiebbar angeordneten Träger (8,8') vorstehen, daß sie im Normalbetrieb in Aussparungen einem Gehäusewandteil (11a) des Turbinengehäuses (4) gelagert sind, die in Form einer Matrize eine Gegenprofilform zu den Leitschaufeln (9) bildet, und daß sie im Bremsbetrieb der Brennkraftmaschine zur Bildung einer Bremseinrichtung bei einer axialen Verschiebung des Trägers (8,8') in den Strömungsspalt (3) ragen.

2. Abgasturboladerturbine nach Anspruch 1,
**dadurch gekennzeichnet, daß**
daß der Träger als Hülse (8,8') ausgebildet ist, die koaxial zur Längsachse des Turbinenrades (2) liegt.

3. Abgasturboladerturbine nach Anspruch 2,
**dadurch gekennzeichnet, daß**
die Hülse (8,8') an ihrer äußeren Umfangswand mit einem Dichtring (12) versehen ist.

4. Abgasturboladerturbine nach einem der Ansprüche 1 bis 3,
**dadurch gekennzeichnet, daß**
der Träger bzw. die Hülse (8) mit einer Betätigungseinrichtung (17-23) zu dessen axialen Verschiebung versehen ist, in die Verstellglieder (16) eingreifen.

5. Abgasturboladerturbine nach Anspruch 4,
**dadurch gekennzeichnet, daß**
die Betätigungseinrichtung wenigstens zwei sich gegenüberliegende Aussparungen (15) in dem Träger bzw. der Hülse (8) aufweisen, in die Verstellnokken (16) ragen, welche über einen Bügel (19) miteinander verbunden sind, an welchem eine Verstelleinrichtung (20-23) angreift.

6. Abgasturboladerturbine nach einem der Ansprüche 1 bis 3,
**dadurch gekennzeichnet, daß**
der Träger bzw. die Hülse (8') mit einer hydraulischen oder pneumatischen Betätigungseinrichtung (24,25,26) versehen ist.

7. Abgasturboladerturbine nach Anspruch 6,
**dadurch gekennzeichnet, daß**
die Hülse (8') als Kolben ausgebildet ist, wobei sich auf der von dem Strömungsspalt (3) abgewandten Seite der Hülse (8') ein Kolbenraum (25) befindet.

8. Abgasturboladerturbine nach Anspruch 6 und 7,
**dadurch gekennzeichnet, daß**
zur Rückstellung der Hülse (8') eine Federeinrichtung (27) an der Hülse (8') angreift.

9. Abgasturboladerturbine nach Anspruch 6 und 7,
**dadurch gekennzeichnet, daß**
zur Rückstellung der Hülse (8') eine hydraulische oder pneumatische Rückstelleinrichtung (28, 29) vorgesehen ist.

10. Abgasturboladerturbine nach Anspruch 7 und 9,
**dadurch gekennzeichnet, daß**
die Hülse (8') mit einem zweiten Kolbenraum (28) versehen ist, der sich zwischen dem Strömungsspalt (3) und dem Kolbenraum (25) befindet, der sich auf der von dem Strömungsspalt (3) abgewandten Seite der Hülse (8') befindet.

11. Abgasturboladerturbine nach einem der Ansprüche 1 bis 10,
**dadurch gekennzeichnet, daß**
die Bremseinrichtung als vorgefertigtes Modul ausgebildet in die Turbine einschiebbar ist, wobei wenigstens das Leitgitter (10) mit den Leitschaufeln (9), der Träger (8,8') und das Gehäusewandteil (11a), das die Matrize bildet, Teile des Moduls sind.

## Claims

1. A turbocharger turbine in an internal combustion engine with a spiral-shaped guide channel positioned in a turbine housing, a turbine wheel, a flow gap between the guide channel and the turbine wheel and with guide blades forming a guide row,
**characterised in that**
the guide row (10) with the guide blades (9) project axially out of a carrier (8, 8) positioned so that it can be moved axially such that during normal operation they are mounted in recesses in a part (11a) of the housing wall (11) of the turbine housing (4) which forms a reverse profile of the guide blades (9) in the form of a matrix and that in braking operation of the internal combustion engine they project into the flow gap (3) in the event of an axial movement of the carrier (8, 8') to form a braking device.

2. A turbocharger turbine in accordance with claim 1,
**characterised in that**
the member (8, 8') is designed as a sleeve which runs coaxially to the longitudinal axis of the turbine wheel (2).

3. A turbocharger turbine in accordance with claim 2,
**characterised in that**
the outer wall of the sleeve (8, 8') is provided with a gasket (12).

4. A turbocharger turbine in accordance with one of claims 1 to 3,
**characterised in that**
the member or sleeve (8, 8') is provided with an actuation device (17-23) to move it axially on which the adjusting members (16) act.

5. A turbocharger turbine in accordance with claim 4,
**characterised in that**
the actuation device has at least two opposing recesses (15) in the carrier or sleeve (8) into which project adjusting cams (16) which are connected together by means of a stirrup (19) on which an adjusting device (20-23) acts.

6. A turbocharger turbine in accordance with one of claims 1 to 3,
**characterised in that**
the carrier or sleeve (8') is provided with a hydraulic or pneumatic actuating device (24, 25, 26).

7. A turbocharger turbine in accordance with claim 6,
**characterised in that**
the sleeve (8') is designed as a piston, a piston chamber (25) being located on the side of the sleeve (8') facing away from the flow gap (3).

8. A turbocharger turbine in accordance with claims 6 and 7,
**characterised in that**
a spring device (27) acts on the sleeve (8') to return the sleeve (8').

9. A turbocharger turbine in accordance with claims 6 and 7,
**characterised in that**
a hydraulic or pneumatic return device (28, 29) is provided to return the sleeve (8').

10. A turbocharger turbine in accordance with claims 7 and 9,
**characterised in that**
the sleeve (8') is provided with a second piston chamber (28) which is located between the flow gap (3) and the piston chamber (25) which is itself located on the side of the sleeve (8') facing away from the flow gap (3).

11. A turbocharger turbine in accordance with one of claims 1 to 10,
**characterised in that**
the braking device designed as a prefabricated module can be inserted into the turbine, with at least the guide row (10) with the guide blades (9), the member (8, 8') and the part (11a) of the housing wall (11) forming the matrix, being part of the module.

## Revendications

1. Turbine de turbocompresseur à gaz d'échappement pour moteur à combustion interne, comportant un canal de guidage en forme de spirale agencé dans un boîtier de turbine, un rotor de turbine, un intervalle d'écoulement entre le canal de guidage et le rotor de turbine, et comportant des aubes de guidage formant une grille de guidage, **caractérisée en ce que** la grille de guidage (10) avec les aubes de guidage (9) fait saillie axialement hors d'un support (8, 8') agencé mobile en translation en direction axiale dans le boîtier de turbine (4) de telle sorte qu'elles sont montées, en service normal, dans des échancrures dans une partie de paroi (11a) du boîtier de turbine (4), laquelle réalise sous forme d'une matrice une forme de profil antagoniste par rapport aux aubes de guidage (9), et **en ce que** pendant le fonctionnement de décélération du moteur à combustion interne elles se projettent dans l'intervalle d'écoulement (3) pour former un dispositif de freinage lors d'une translation axiale du support (8, 8').

2. Turbine de turbocompresseur à gaz d'échappement selon la revendication 1, **caractérisée en ce que** le support est réalisé sous la forme d'une douille (8, 8') qui se situe coaxialement à l'axe longitudinal du rotor de turbine (2).

3. Turbine de turbocompresseur à gaz d'échappement selon la revendication 2, **caractérisée en ce que** la douille (8, 8') est pourvue d'un anneau d'étanchement (12) sur sa paroi périphérique extérieure.

4. Turbine de turbocompresseur à gaz d'échappement selon l'une quelconque des revendications 1 à 3, **caractérisée en ce que** le support ou la douille (8) est pourvu(e) d'un dispositif d'actionnement (17 à 23) pour sa translation axiale, dans lequel s'engagent des organes de déplacement (16).

5. Turbine de turbocompresseur à gaz d'échappement selon la revendication 4, **caractérisée en ce que** le dispositif d'actionnement comprend au moins deux échancrures (15) opposées l'une à l'autre dans le support ou dans la douille (8), dans lesquelles se projettent des cames de déplacement (16) qui sont reliées entre elles au moyen d'un étrier (19) attaqué par un dispositif de déplacement (20 à 23).

6. Turbine de turbocompresseur à gaz d'échappement selon l'une quelconque des revendications 1 à 3, **caractérisée en ce que** le support ou la douille (8') est pourvu(e) d'un dispositif d'actionnement hydraulique ou pneumatique (24, 25, 26).

7. Turbine de turbocompresseur à gaz d'échappement selon la revendication 6, **caractérisée en ce que** la douille (8') est réalisée sous forme de piston, une chambre à piston (25) se situant sur le côté de la douille (8') qui est détourné de l'intervalle d'écoulement (3).

8. Turbine de turbocompresseur à gaz d'échappement selon les revendications 6 et 7, **caractérisée en ce que** pour le rappel de la douille (8'), un dispositif à ressort (27) attaque la douille (8').

9. Turbine de turbocompresseur à gaz d'échappement selon les revendications 6 et 7, **caractérisée en ce que** pour le rappel de la douille (8'), il est prévu un dispositif de rappel hydraulique ou pneumatique (28, 29).

10. Turbine de turbocompresseur à gaz d'échappement selon les revendications 7 et 9, **caractérisée en ce que** la douille (8') est pourvue d'une deuxième chambre à piston (28) qui se situe entre l'intervalle d'écoulement (3) et la chambre à piston (25) qui se trouve sur le côté de la douille (8') détourné de l'intervalle d'écoulement (3).

11. Turbine de turbocompresseur à gaz d'échappement selon l'une quelconque des revendications 1 à 10, **caractérisée en ce que** le dispositif de décélération est réalisé sous la forme d'un module préfabriqué susceptible d'être introduit dans la turbine, et **en ce qu'**au moins la grille de guidage (10) comportant les aubes de guidage (9), le support (8, 8') et la partie de paroi de boîtier (11) formant la matrice font partie du module.
